# EUROPEAN PATENT APPLICATION

(11) **EP 4 108 465 A1**
(43) Date of publication of application: **28.12.2022**
(21) Application number: 22178308.7
(22) Date of filing: 10.06.2022
(51) Int. Cl.: B41J 2/21, G06K 15/02, H04N 1/407

(54) **LIQUID DISCHARGE APPARATUS AND METHOD FOR GENERATING DENSITY CORRECTION DATA**

(30) Priority: 25.06.2021 JP 2021106084
(71) Applicant: Ricoh Company, Ltd., Tokyo 143-8555 (JP)
(72) Inventor: AGATA, Kenichi, Tokyo, 143-8555 (JP)
(74) Representative: SSM Sandmair

(57) **Abstract**

A liquid discharge apparatus includes a density correction data generator (96, 97, 98, 99) and a memory (81). The density correction data generator (96, 97, 98, 99) generates density correction data corresponding to a reference printing condition, based on reference measurement data on a measurement result of a patch pattern printed under the reference printing condition, to control an image density. The memory (81) stores difference data on a difference between measurement data of one or more printing conditions different from the reference printing condition and the reference measurement data. The density correction data generator (96, 97, 98, 99) generates density correction data corresponding to the one or more printing conditions different from the reference printing condition, based on the reference measurement data and the difference data stored in the memory.

## Description

### BACKGROUND

### Technical Field

Embodiments of the present disclosure relate to a liquid discharge apparatus and a method for generating density correction data.

### Related Art

An image forming apparatus using, for example, a so-called inkjet method is known in the art. In such an image forming apparatus, preferably, an image with a desired density based on input image data is output.

For this reason, in a color image processing method disclosed in Japanese Unexamined Patent Application Publication No. H01-041375, a predetermined patch pattern is printed for each color of cyan, magenta, yellow, and black, and the patterns are read by, for example, a scanner, a colorimeter or a densitometer. Then, a deviation amount between each of the read values, i.e., color measurement values, and a corresponding one of expected values is detected, and density correction of an output image is performed based on the detected deviation amounts as density calibration processing. Thus, an output image having a desired ink density based on the input image data can be obtained.

However, in the case of the color image processing method disclosed in Japanese Unexamined Patent Application Publication No. H01-041375, every time printing is performed under different printing conditions, it is necessary to perform the density calibration processing in which predetermined patterns are printed, the colors of the printed patterns are measured, and the density of the output image based on the result of the measurement is corrected.

In other words, it is necessary to perform the above-described density calibration processing every time the printing conditions are changed, for example, when a pretreatment such as application of a bleeding inhibitor for preventing printing bleeding is performed on a recording medium or when the pretreatment is not performed. Similarly, it is necessary to perform the above-described density calibration processing every time the printing conditions are changed, for example, when printing is performed at different resolutions, when printing is performed at different printing speeds, when printing is performed on different types of sheets, and when printing is performed with different types of inks.

Accordingly, repeatedly performing the density calibration processing for each printing condition may increase the number of steps, for example, in the density calibration processing when the image forming apparatus is installed.

### SUMMARY

In light of the above-described problems, an object of the present disclosure is to provide a liquid discharge apparatus and a method for generating density correction data that can complete density calibration processing for each printing condition with a small number of steps.

According to an embodiment of the present disclosure, a liquid discharge apparatus that includes a density correction data generator and a memory. The density correction data generator generates density correction data corresponding to a reference printing condition, based on reference measurement data on a measurement result of a patch pattern printed under the reference printing condition, to control an image density. The memory stores difference data on a difference between measurement data of one or more printing conditions different from the reference printing condition and the reference measurement data. The density correction data generator generates density correction data corresponding to the one or more printing conditions different from the reference printing condition, based on the reference measurement data and the difference data stored in the memory.

According to another embodiment of the present disclosure, there is provided a method for generating density correction data to control an image density in a liquid discharge apparatus, the method includes: generating density correction data corresponding to a reference printing condition, based on reference measurement data on a measurement result of a patch pattern printed under the reference printing condition; and generating density correction data corresponding to one or more printing conditions different from the reference printing condition, based on the reference measurement data and difference data stored in a memory. The difference data are on a difference between measurement data of the one or more printing conditions different from the reference printing condition and the reference measurement data.

According to one aspect of the present disclosure, density calibration processing for each of various printing conditions can be completed in a small number of steps.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating a system configuration of a line engine printing system, according to an embodiment of the present disclosure;
FIG. 2 is a block diagram illustrating a hardware configuration of relevant parts of a surface printing apparatus provided for the line engine printing system of FIG. 1;
FIG. 3 is a functional block diagram illustrating functions implemented by a controller executing a print control program provided for the surface printing apparatus of FIG. 2;
FIG. 4 is a flowchart illustrating a printing operation performed by a controller of the surface printing apparatus of FIG. 2 based on a print control program;
FIG. 5 is a functional block diagram illustrating functions implemented by a gradation adjustment unit based on the print control program of FIG.4;
FIG. 6 is a flowchart illustrating a procedure of density calibration processing performed by the controller of FIG. 3;
FIG. 7 is a diagram illustrating a patch pattern for the density calibration processing according to an embodiment of the present disclosure;
FIG. 8 is a graph illustrating an output density (OD) curve according to an embodiment of the present disclosure;
FIG. 9 is a graph illustrating a correction curve calculated by a density correction data generator, according to an embodiment of the present disclosure;
FIG. 10 is a graph illustrating an OD curve of a first printing condition and an OD curve of a second printing condition, according to an embodiment of the present disclosure;
FIG. 11 is a graph illustrating an OD curve obtained by printing a patch pattern on a recording medium under the first printing condition of FIG. 10 and measuring the patch pattern, and an OD curve calculated based on gradation-and-density difference data corresponding to the second printing condition of FIG. 10; and
FIG. 12 is a graph illustrating a first correction curve and a second correction curve based on different printing conditions, according to an embodiment of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A line engine printing system according to embodiments of the present disclosure is described below with reference to the accompanying drawings in the following description.

### System Configuration

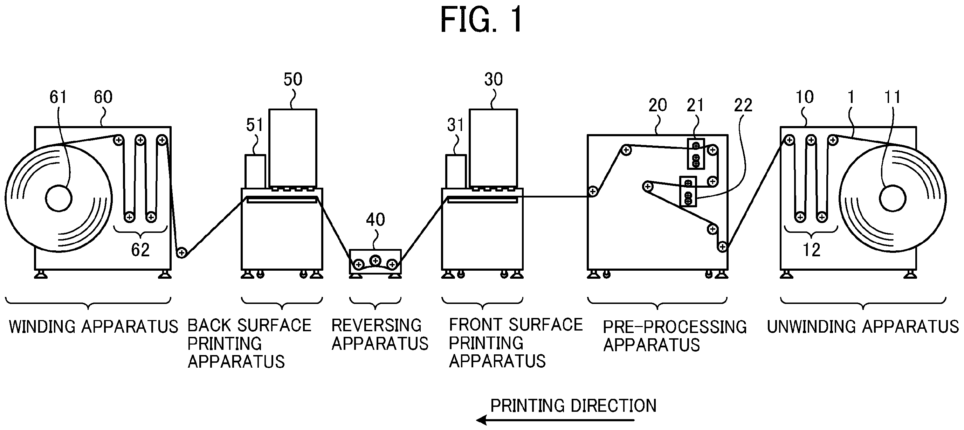

FIG. 1 is a diagram illustrating a system configuration of a line engine printing system according to an embodiment of the present disclosure. As illustrated in FIG. 1, the line engine printing system includes an unwinding apparatus 10, a pretreatment apparatus 20, a front surface printing apparatus 30, a scanner 31, a front and back reversing apparatus 40, a back surface printing apparatus 50, a scanner 51, and a winding apparatus 60.

In such a line engine printing system, a recording medium 1 in a roll shape is wound around an unwinding device 11 of the unwinding apparatus 10. The recording medium 1 is unwound from the unwinding device 11 and supplied to the pretreatment apparatus 20 via a buffer device 12.

The recording medium 1 supplied to the pretreatment apparatus 20 passes through a coater 22 for coating a back surface of the recording medium 1 with a pretreatment solution and a coater 21 for coating a front surface of the recording medium 1 with the pretreatment solution sequentially. Accordingly, the recording medium 1 is subjected to a pretreatment that applies a bleeding inhibitor for preventing printing bleeding to both of the front surface and the back surface of the recording medium 1.

The recording medium 1 subjected to such pretreatment is supplied to the front surface printing apparatus 30. The front surface printing apparatus 30 is a so-called inkjet printer. The front surface printing apparatus 30 discharges ink from print heads onto the surface of the recording medium 1 to print, for example, desired characters or an image. Then, the front surface printing apparatus 30 dries the printed recording medium 1 with a dryer and supplies the recording medium 1 to the front and back reversing apparatus 40. The scanner 31 optically reads the surface of the recording medium 1 while the recording medium 1 is supplied from the front surface printing apparatus 30 to the front and back reversing apparatus 40. The image read by the scanner 31 is used for image inspection of the surface of the recording medium 1.

The front and back reversing apparatus 40 reverses the recording medium 1 and supplies the recording medium 1 to the back surface printing apparatus 50. The back surface printing apparatus 50 is also an inkjet printer similar to the front surface printing apparatus 30. The back surface printing apparatus 50 discharges ink from the print heads onto the back surface of the recording medium 1 to print, for example, desired characters or an image. After the back surface printing apparatus 50 dries the printed recording medium 1 with a dryer, the back surface printing apparatus 50 supplies the recording medium 1 to the winding apparatus 60. While the recording medium 1 is supplied from the back surface printing apparatus 50 to the winding apparatus 60, the scanner 51 optically reads the back surface of the recording medium 1. The image read by the scanner 51 is used for inspecting the image of the back surface of the recording medium 1. The winding apparatus 60 winds the recording medium 1 of which the front surface and the back surface have been printed by a winder 61 via a buffer device 62.

### Hardware Configuration of Relevant Parts of Front Surface Printing Apparatus

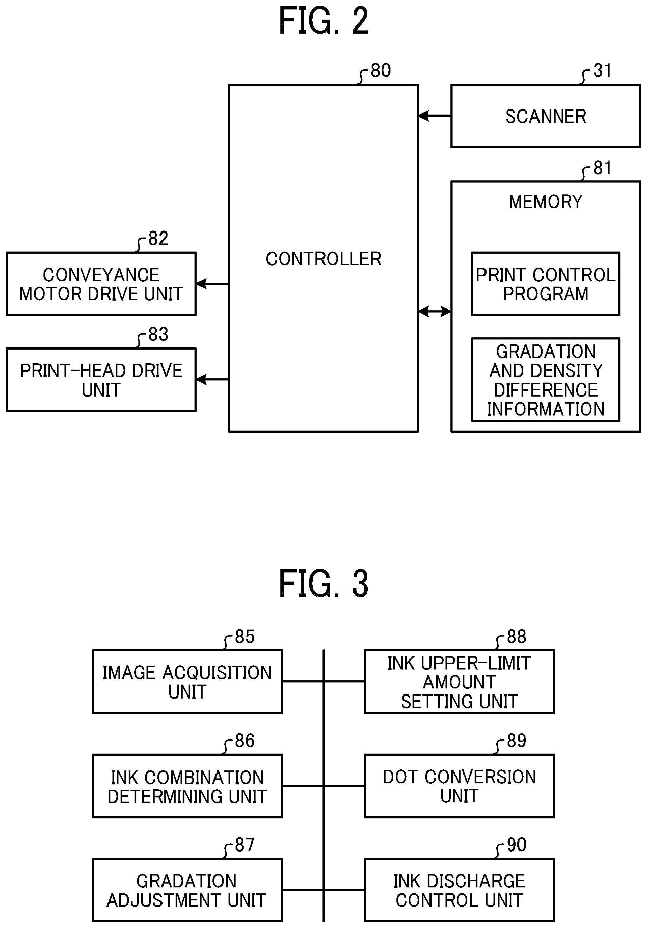

FIG. 2 is a block diagram illustrating a hardware configuration of relevant parts of the front surface printing apparatus 30, according to the present embodiment. Note that the back surface printing apparatus 50 also has a hardware configuration similar to the hardware configuration of the front surface printing apparatus 30 illustrated in FIG. 2. As illustrated in FIG. 2, the front surface printing apparatus 30 includes a controller 80, a memory 81, a conveyance motor drive unit 82, and a print-head drive unit 83. The memory 81 stores a print control program and gradation-and-density difference data. The controller 80 operates based on the print control program to drive the print heads via the print-head drive unit 83 to discharge ink onto the recording medium 1 while conveying and controlling the recording medium 1 via the conveyance motor drive unit 82. Thus, the front surface printing apparatus 30 prints, for example, an image and characters.

The gradation-and-density difference data is a difference value between a gradation-and-density characteristic value in one printing condition and a gradation-and-density characteristic value in another printing condition. More specifically, for example, a difference value between a gradation-and-density characteristic value in a case in which a pretreatment such as application of a bleeding inhibitor for preventing printing bleeding is performed to the recording medium 1 and a gradation-and-density characteristic value in a case in which the pretreatment is not performed is stored in the memory 81 as the gradation-and-density difference data. Similarly, difference values between gradation-and-density characteristic values in different resolutions are stored in the memory 81 as gradation-and-density difference data, such as a difference value between a gradation-and-density characteristic value when the resolution is, for example, 600 dots per inch (dpi) and a gradation-and-density characteristic value when the resolution is 300 dpi.

Similarly, difference values of gradation-and-density characteristic values between different printing speeds are stored in the memory 81 as gradation-and-density difference data, such as a difference value between a gradation-and-density characteristic value when the printing speed is high and a gradation-and-density characteristic value when the printing speed is low.

Similarly, difference values of gradation-and-density characteristic values between different sheets are stored in the memory 81 as gradation-and-density difference data, such as a difference value between a gradation-and-density characteristic value when the recording medium 1 is, for example, plain paper and a gradation-and-density characteristic value when the recording medium 1 is coated paper,

Similarly, difference values of gradation-and-density characteristic values between different inks are stored in the memory 81 as gradation-and-density difference data, such as a difference value between a gradation-and-density characteristic value when ink used for printing is, for example, aqueous ink and a gradation-and-density characteristic value when the ink used for printing is ultraviolet curing ink.

As described later in detail, when the controller 80 detects the gradation-and-density characteristic value by printing and performing colorimetry of a predetermined pattern under one printing condition during density calibration processing, the controller 80 refers to the gradation-and-density difference data stored in the memory 81 and calculates the gradation-and-density characteristic value under the other printing condition by arithmetic processing. Accordingly, the number of required printing steps and color measurement steps for the predetermined patch patterns can be greatly reduced.

### Print Processing Function

FIG. 3 is a functional block diagram illustrating functions implemented by the controller 80 executing the print control program according to the present embodiment. As illustrated in FIG. 3, the controller 80 executes the print control program to implement the functions of an image acquisition unit 85, an ink-combination determining unit 86, a gradation adjustment unit 87, an upper-limit amount setting unit 88, a dot conversion unit 89, and an ink discharge control unit 90.

The image acquisition unit 85 acquires image data such as an image to be printed from a personal computer connected to the front surface printing apparatus 30 or an external memory such as a universal serial bus (USB) memory. The ink-combination determining unit 86 determines a combination of ink colors that can be used in the front surface printing apparatus 30 based on the acquired image data. The gradation adjustment unit 87 determines an output gradation for an input gradation to obtain a desired density in the determined ink color. The upper-limit amount setting unit 88 determines an upper-limit amount of the adhesion amount of ink to a sheet to be printed so as not to exceed the drying capacity of the ink in the front surface printing apparatus 30. The dot conversion unit 89 converts image data of an image to be printed into dot data that can be expressed by the front surface printing apparatus 30. The ink discharge control unit 90 controls discharge of ink by the print heads based on the dot data obtained by the conversion process.

### Printing Operation

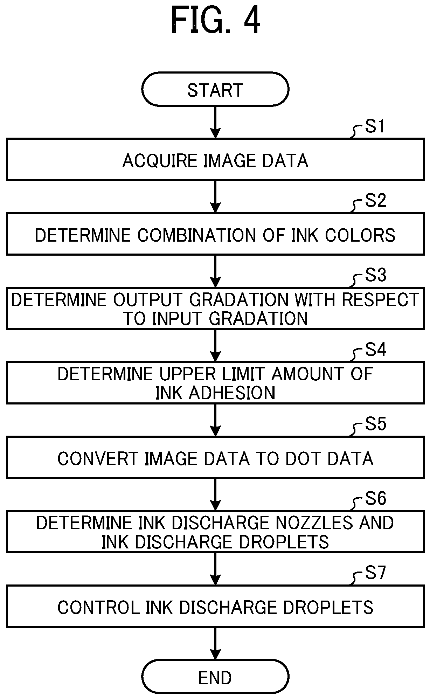

FIG. 4 is a flowchart illustrating a printing operation performed by the controller 80 of the front surface printing apparatus 30 based on the print control program, according to the present embodiment. In the flowchart of FIG. 4, first, in step S1, the image acquisition unit 85 acquires image data such as an image to be printed from a personal computer connected to the front surface printing apparatus 30 or an external memory such as a USB memory.

In step S2, the ink-combination determining unit 86 determines a combination of ink colors that can be used in the front surface printing apparatus 30 based on the acquired image data. In step S3, the gradation adjustment unit 87 determines an output gradation with respect to an input gradation to adjust the color of each ink to a desired image density.

In step S4, the upper-limit amount setting unit 88 determines the upper-limit amount of ink adhesion to a sheet to be printed so as not to exceed the drying capacity of the ink in the front surface printing apparatus 30. In step S5, the dot conversion unit 89 converts image data of an image to be printed into dot data that can be expressed by the front surface printing apparatus 30. In step S6, the ink discharge control unit 90 determines discharge nozzles to be used and droplets to be discharged based on the dot data obtained by the above-described conversion process. Then, in step S7, the ink discharge control unit 90 controls discharge of ink by the print heads such that the determined droplets are discharged from the determined discharge nozzles. Accordingly, for example, an image or characters corresponding to the image data obtained in step S1 is printed on the front surface of the recording medium 1.

Note that the printing operation of the back surface printing apparatus 50 is similar to the printing operation of the front surface printing apparatus 30 (See the description above).

### Detailed Functions of Gradation Adjustment Unit

Next, the processing for determining the output gradation with respect to the input gradation described in step S3 of the flowchart of FIG. 4 is performed as the density calibration processing that is one of the initial adjustment items at the time of machine installation of the line engine printing system.

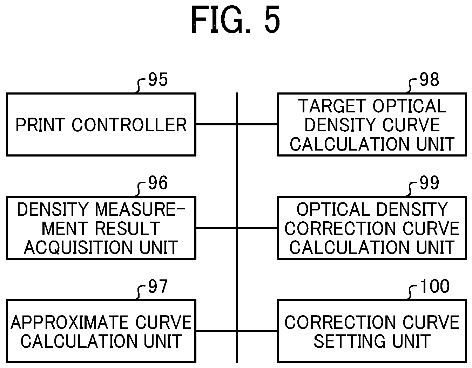

FIG. 5 is a functional block diagram illustrating functions implemented by the gradation adjustment unit 87 based on the print control program, according to the present embodiment. As illustrated in FIG. 5, the gradation adjustment unit 87 includes a print control unit 95, a density-measurement-result acquisition unit 96, an approximate curve calculation unit 97, a target optical density curve calculation unit 98, an optical density correction curve calculation unit 99, and a correction curve setting unit 100. The density-measurement-result acquisition unit 96, the approximate curve calculation unit 97, the target optical density curve calculation unit 98, and the optical density correction curve calculation unit 99 each serves as a density correction data generator.

The print control unit 95 controls the print-head drive unit 83 so as to print patch patterns for density calibration. The density-measurement-result acquisition unit 96 obtains a color measurement result of the patch patterns color measured by the scanner 31 as reference measurement data. The approximate curve calculation unit 97 calculates a gradation-based image-density characteristic value, which is a characteristic value indicating the image density for each of the gradations measured, based on the color measurement result of the patch patterns. In addition, the approximate curve calculation unit 97 calculates an optical density (OD) curve which is an approximate curve of each of the calculated gradation-based image-density characteristic values.

The target optical density curve calculation unit 98 sets a target OD for a target image density based on the OD curve and calculates a target OD curve indicating a gradation-based image-density characteristic value that linearly changes up to the target OD. Based on the OD curve and the target OD curve, the optical density correction curve calculation unit 99 calculates a correction curve to obtain intermediate gradations that are linear in the image density. The correction curve setting unit 100 sets the calculated correction curve in the ink discharge control unit 90. Such a configuration as described above allows the ink discharge control unit 90 to control, for example, the discharge amount of each nozzle of the print heads based on the correction curve. Thus, an output image having a desired image density can be obtained.

### Density Calibration Processing

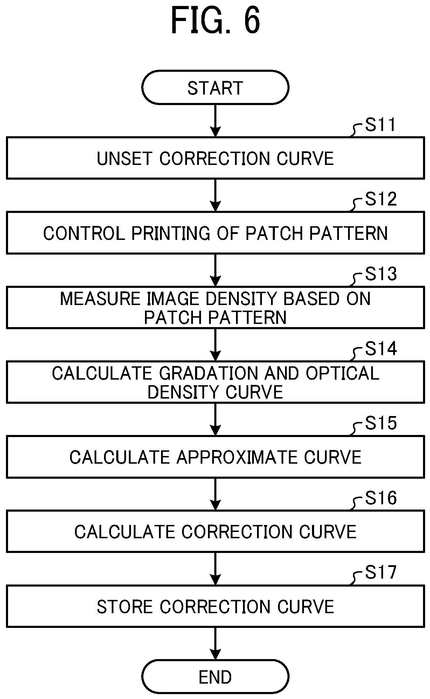

FIG. 6 is a flowchart illustrating a procedure of the density calibration processing according to the present embodiment. In step S11, it is necessary to perform density calibration before density is not yet adjusted. For this reason, the print control unit 95 confirms that the above-described correction curve is not set in the ink discharge control unit 90 or unsets the correction curve in the ink discharge control unit 90.

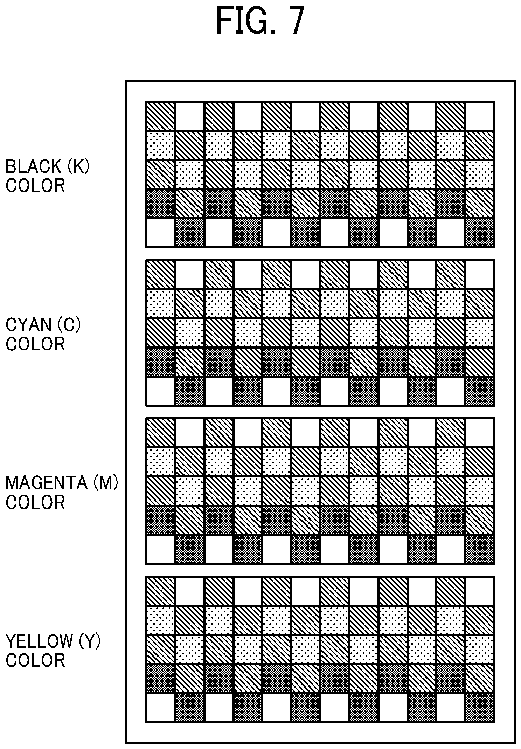

In step S12, the print control unit 95 controls printing of patch patterns to be used for the density calibration via the print-head drive unit 83. FIG. 7 is a diagram illustrating patch patterns for the density calibration according to the present embodiment. As illustrated in FIG. 7, the print control unit 95 prints a patch pattern for each single color of black (K), cyan (C), magenta (M), and yellow (Y) on the recording medium. Each of the patch patterns includes gradation patches of the corresponding one of the colors. The patch patterns are read by the scanner 31.

In step S13, the density-measurement-result acquisition unit 96 measures the image density based on the patch patterns read by the scanner 31. In steps S14 and S15, the approximate curve calculation unit 97 calculates the above-described OD curve based on the measurement result of the image density.

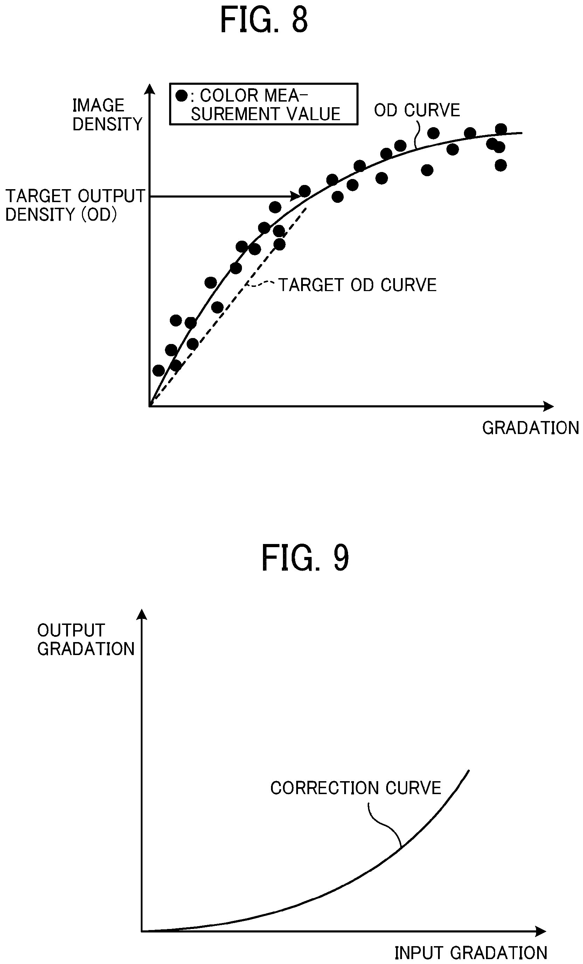

FIG. 8 is a graph illustrating the OD curve according to the present embodiment. In FIG. 8, the horizontal axis represents gradation and the vertical axis represents gradation-based image-density characteristic value of the image density. Each black dot in FIG. 8 indicates a color measurement value as a measurement result of each of the patch patterns. As indicated with a solid line in FIG. 8, the approximate curve calculation unit 97 calculates the OD curve, which is an approximate curve of each of the color measurement values, as an example of the measurement data.

Next, in step S16, the target optical density curve calculation unit 98 sets a target OD at a target image density based on the OD curve as illustrated in FIG. 8 and calculates a target OD curve indicating a gradation-based image-density characteristic value that linearly changes up to the target OD. Then, based on the OD curve and the target OD curve, the optical density correction curve calculation unit 99 calculates a correction curve to obtain intermediate gradations that are linear in image density as illustrated in FIG. 9.

In step S17, the correction curve setting unit 100 stores output correction data corresponding to the calculated correction curve in the memory 81. When printing is performed, the ink discharge control unit 90 controls, for example, the discharge amount of each of the nozzles of the print heads based on the output correction data read from the memory 81. Accordingly, ink discharge control corresponding to the correction curve can be performed. Thus, an output image having a desired image density can be obtained.

Note that the measurement of the patch patterns in step S13 may be executed at any timing as long as an image that includes the patch patterns is an image that has been printed and dried. Further, the scanner 31 and the scanner 51 may measure the image density based on the image that includes the patch patterns.

Alternatively, the measurement of the patch patterns in step S13 may be performed by a scanner provided in the front surface printing apparatus 30 or in the back surface printing apparatus 50.

### Reduction of Number of Steps Required for Density Calibration Processing

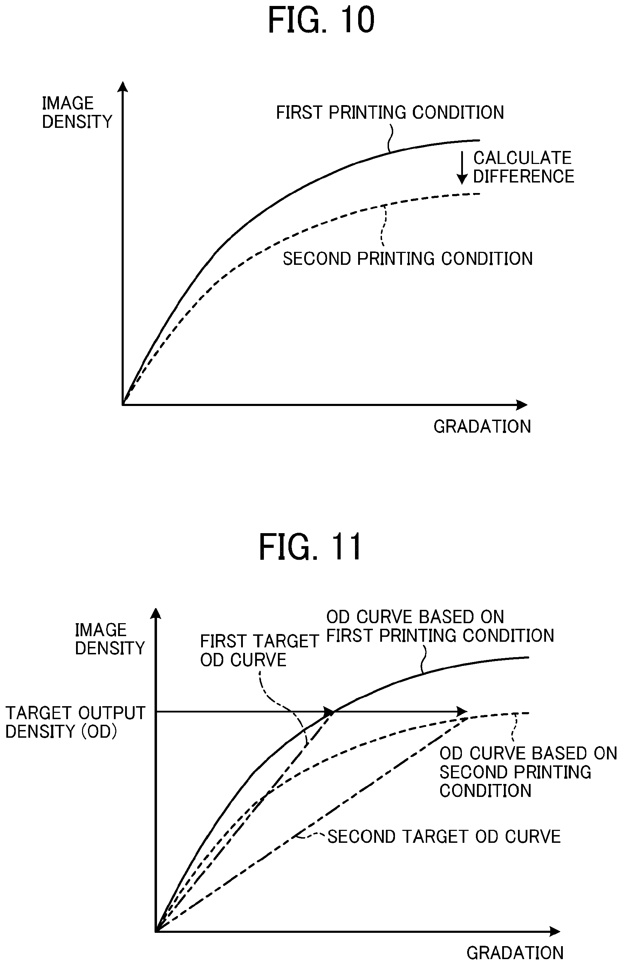

FIG. 10 is a graph illustrating an OD curve of a first printing condition and an OD curve of a second printing condition, according to the present embodiment. The printing conditions include, for example, a condition in which a pretreatment such as application of a bleeding inhibitor for preventing printing bleeding is performed on the recording medium 1 as an example of a reference printing condition and a condition in which the pretreatment is not performed as an example of other printing conditions, a condition in which the resolution is, for example, 600 dpi, and a condition in which the resolution is 300 dpi. Alternatively, the printing conditions may include, for example, a condition in which the printing speed is high or low, a condition in which the sheet of paper used as the recording medium 1 is, for example, plain paper or coated paper, and a condition in which the ink used for printing is, for example, aqueous ink or ultraviolet curing ink.

A description is given below of a case in which the printing conditions are, for example, a condition in which a pretreatment such as application of a bleeding inhibitor for preventing printing bleeding is performed on the recording medium 1 and a condition in which the pretreatment is not performed on the recording medium 1. An OD curve of the first printing condition indicated by a solid line in FIG. 10 is, for example, an OD curve in the case in which the pretreatment is performed, and the OD curve of the second printing condition indicated by a dotted line in FIG. 10 is, for example, an OD curve in the case in which the pretreatment is not performed.

A step of printing an image of patch patterns on the recording medium 1 that has been subjected to the pretreatment and measuring the patch pattern image and a step of printing a patch pattern image on the recording medium 1 that has not been subjected to the pretreatment and measuring the patch pattern image are necessary to obtain an OD curve corresponding to each of the above-described printing conditions.

In the present embodiment, as illustrated in FIG. 10, if a difference between the OD curve of the first printing condition and the OD curve of the second printing condition, i.e., a difference value between a gradation-based image-density characteristic value of the first printing condition and a gradation-based image-density characteristic value of the second printing condition is known in advance, for example, calculating the OD curve of the first printing condition allows calculating the OD curve of the second printing condition from the difference between the OD curve of the first printing condition and the OD curve of the second printing condition. A calculation in a reversed manner is also possible. Only calculating the OD curve of the second printing condition allows calculating the OD curve of the first printing condition from the difference between the OD curve of the first printing condition and the OD curve of the second printing condition.

For this reason, in the line engine printing system according to the present embodiment, the gradation-and-density difference data as an example of difference data indicating the difference value between the OD curve of the first printing condition and the OD curve of the second printing condition is measured and stored in advance in the memory 81 as an example of a storage unit of the front surface printing apparatus 30 and the back surface printing apparatus 50 illustrated in FIG. 2. Accordingly, when the OD curve of the first printing condition is calculated in step S14 and step S15, the approximate curve calculation unit 97 calculates the second OD curve based on the gradation-and-density difference data stored in the memory 81.

FIG. 11 is a graph illustrating an OD curve obtained by printing patch patterns on the recording medium 1 based on the first printing condition and measuring the patch patterns, and an OD curve calculated based on gradation-and-density difference data corresponding to the second printing condition, according to the present embodiment. An OD curve indicated by a solid line in FIG. 11 is an OD curve of the first printing condition obtained by printing and measuring the patch pattern. On the other hand, an OD curve indicated by a dotted line in FIG. 11 is an OD curve of the second printing condition calculated based on the gradation-and-density difference data. As an example, the first printing condition is a condition in which pretreatment is not performed on the recording medium 1, and the second printing condition is a condition in which the pretreatment is performed on the recording medium 1.

Alternatively, the first printing condition may be a condition in which the pretreatment is performed on the recording medium 1, and the second printing condition may be a condition in which the pretreatment is not performed on the recording medium 1. In this case, the approximate curve calculation unit 97 calculates an OD curve corresponding to the condition in which the pretreatment is performed on the recording medium 1 based on a measurement result of the patch pattern printed on the recording medium 1 on which the pretreatment has been performed. Further, the approximate curve calculation unit 97 calculates an OD curve corresponding to the condition in which the pretreatment is not performed on the recording medium 1 based on the gradation-and-density difference data corresponding to the recording medium 1 on which the pretreatment is not performed.

As described above, when the gradation-and-density difference data is stored in advance in the memory 81, two OD curves corresponding to different printing conditions can be obtained by one round of printing and measuring a patch pattern.

Note that in the above-described example, one round of printing and measuring a patch pattern is performed based on the gradation-and-density difference data indicating the difference between the OD curve of the first printing condition and the OD curve of the second printing condition. Thus, two OD curves corresponding to different printing conditions are obtained. However, this is a minimum example. In addition to the gradation-and-density difference data indicating the difference between the OD curve of the first printing condition and the OD curve of the second printing condition, the gradation-and-density difference data indicating a difference between the OD curve of the first printing condition and an OD curve of a third printing condition and gradation-and-density difference data indicating a difference between the OD curve of the first printing condition and an OD curve of a fourth printing condition are stored in the memory 81. Such a configuration as described above allows the OD curve of the second printing condition, the OD curve of the third printing condition, and the OD curve of the fourth printing condition to be calculated when the printing and measurement of the patch pattern is performed once under the first printing condition.

Next, in step S16, the target optical density curve calculation unit 98 sets a target OD to a target image density based on the OD curve of the first printing condition and the OD curve of the second printing condition illustrated in FIG. 11. Further, the target optical density curve calculation unit 98 calculates a first target OD curve corresponding to the OD curve of the first printing condition and a second target OD curve corresponding to the OD curve of the second printing condition, each of which indicates a gradation-based image-density characteristic value that linearly changes up to the target OD. In FIG. 11, a straight dot-and-dash line is a first target OD curve, and a straight two-dot chain line is a second target OD curve.

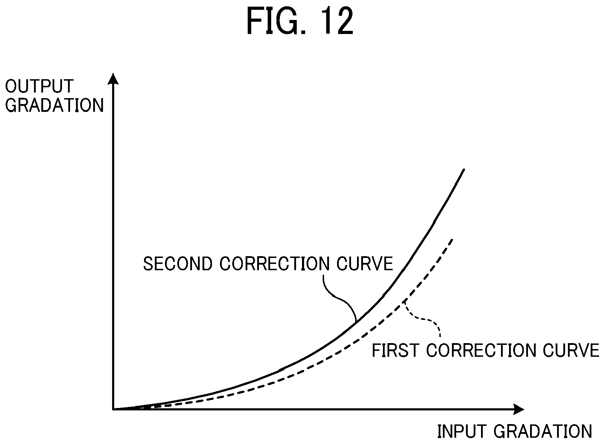

Next, based on the OD curve of the first printing condition and the first target OD curve, the optical density correction curve calculation unit 99 calculates a correction curve, i.e., a first correction curve for the first printing condition to obtain intermediate gradations that are linear in the image density as indicated by a dotted line in FIG. 12. Further, the optical density correction curve calculation unit 99 calculates a correction curve, i.e., a second correction curve for the second printing condition to obtain intermediate gradations that are linear in image density, as indicated by a solid line in FIG. 12, based on the OD curve of the second printing condition and the second target OD curve.

In step S17, the correction curve setting unit 100 stores the output correction data corresponding to the calculated correction curve in the memory 81. When printing is performed, the ink discharge control unit 90 reads out output correction data corresponding to printing conditions such as the presence or absence of the above-described pretreatment, resolution, or printing speed from the memory 81. Then, based on the read output correction data, the ink discharge control unit 90 controls, for example, the discharge amount of each of nozzles of the print heads. Such a configuration as described above allows the image density of the input and output image to be adjusted and the ink discharge control to be performed using the correction curve corresponding to each printing condition. Thus, an output image having a desired image density can be obtained.

Note that the operation of the back surface printing apparatus 50 is similar to the above-described operation of the front surface printing apparatus 30. For this reason, refer to the description of the operation of the front surface printing apparatus 30 described above for the operation of the back surface printing apparatus 50.

### Advantageous Effects of Embodiments

As apparent from the above description, the line engine printing system according to the embodiments of the present disclosure stores the gradation-and-density difference data between the reference printing condition and the other printing conditions in the memory 81. Based on the color measurement result obtained by printing and color measuring the predetermined patch patterns, the line engine printing system calculates a gradation-based image-density characteristic value, which is a characteristic value indicating the image density for each of the gradations measured. The line engine printing system also calculates an OD curve and a corrected OD curve, which are approximate curves of each of the calculated gradation-based image-density characteristic values, as an example of the density correction data.

Further, when the gradation-based image-density characteristic value, the OD curve, and the corrected OD curve of one printing condition are calculated as described above, the gradation-based image-density characteristic value of the other printing condition, which is the difference between the gradation-based image-density characteristic value of the one printing condition and the gradation-based image-density characteristic value of the other printing condition, is calculated based on the gradation-and-density difference data stored in the memory 81, and the OD curve and the corrected OD curve are calculated.

Thus, if the printing process and the colorimetry process of the patch patterns are performed once, both the corrected OD curve for the one printing condition and the corrected OD curve for the other printing condition can be calculated. Accordingly, the number of times of necessary number of printing and color measurement process can be reduced to once. Thus, the density calibration process for each of the printing conditions can be completed with a reduced number of steps. In addition, the time required for installing the line engine printing system can be reduced.

Further, performing pretreatment on the recording medium 1 allows an OD curve with high accuracy to be calculated. Accordingly, setting the OD curve calculated by performing the pretreatment on the recording medium 1 as the reference measurement data allows calculating high-precision gradation-and-density difference data which is the difference from the OD curve in the case in which the pretreatment is not performed. Thus, high-precision density calibration processing can be performed.

Lastly, the above-described embodiments are presented as examples and are not intended to limit the scope of the present disclosure. The above-described embodiments can be implemented in other various forms, and various omissions, replacements, and changes can be made without departing from the scope of the present disclosure. In addition, the embodiments and modifications or variations thereof are included in the scope and the gist of the present disclosure.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The present disclosure can be implemented in any convenient form, for example using dedicated hardware, or a mixture of dedicated hardware and software. The present disclosure may be implemented as computer software implemented by one or more networked processing apparatuses. The processing apparatuses include any suitably programmed apparatuses such as a general-purpose computer, a personal digital assistant, a Wireless Application Protocol (WAP) or third-generation (3G)-compliant mobile telephone, and so on. Since the present invention can be implemented as software, each and every aspect of the present disclosure thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A liquid discharge apparatus comprising:
a density correction data generator (96, 97, 98, 99) configured to generate density correction data corresponding to a reference printing condition, based on reference measurement data on a measurement result of a patch pattern printed under the reference printing condition, to control an image density; and
a memory (81) configured to store difference data on a difference between measurement data of one or more printing conditions different from the reference printing condition and the reference measurement data,
the density correction data generator (96, 97, 98, 99) configured to generate density correction data corresponding to the one or more printing conditions different from the reference printing condition, based on the reference measurement data and the difference data stored in the memory.

2. The liquid discharge apparatus according to claim 1,
wherein the reference printing condition is a printing condition in which a pretreatment for applying at least a bleeding inhibitor to prevent printing bleeding is not performed on a recording medium (1), and
wherein the one or more printing conditions different from the reference printing condition is a printing condition in which the pretreatment is performed on the recording medium (1).

3. The liquid discharge apparatus according to claim 1,
wherein the reference printing condition is a printing condition in which a pretreatment for applying at least a bleeding inhibitor to prevent printing bleeding is performed on a recording medium (1), and
wherein the one or more printing conditions different from the reference printing condition is a printing condition in which the pretreatment is not performed on the recording medium (1)

4. The liquid discharge apparatus according to claim 1,
wherein the reference printing condition is a printing condition in which printing is performed at a predetermined resolution,
wherein the one or more printing conditions different from the reference printing condition is a printing condition in which printing is performed at a resolution different from the predetermined resolution,
wherein the reference printing condition is a printing condition in which printing is performed at a predetermined printing speed, and
wherein the one or more printing conditions different from the reference printing condition is a printing condition in which printing is performed at a printing speed different from the predetermined printing speed.

5. The liquid discharge apparatus according to claim 1,
wherein the reference printing condition is a printing condition in which printing is performed on a predetermined type of sheet of paper,
wherein the one or more printing conditions different from the reference printing condition is a printing condition in which printing is performed on a different type of sheet of paper from the predetermined type of sheet of paper,
wherein the reference printing condition is a printing condition in which printing is performed using a predetermined type of ink, and
wherein the one or more printing conditions different from the reference printing condition is a printing condition in which printing is performed using a different type of ink from the predetermined type of ink.

6. A method for generating density correction data to control an image density in a liquid discharge apparatus, the method comprising:
generating density correction data corresponding to a reference printing condition, based on reference measurement data on a measurement result of a patch pattern printed under the reference printing condition; and
generating density correction data corresponding to one or more printing conditions different from the reference printing condition, based on the reference measurement data and difference data stored in a memory (81), the difference data being on a difference between measurement data of the one or more printing conditions different from the reference printing condition and the reference measurement data.
